# EUROPÄISCHE PATENTSCHRIFT

(11) **EP 1 018 292 B1**
(45) Veröffentlichungstag und Bekanntmachung des Hinweises auf die Patenterteilung: **11.05.2005**
(21) Anmeldenummer: 99120135.1
(22) Anmeldetag: 08.10.1999
(51) Int. Cl.: A01B 63/10

(54) **Hubwerk für die Unterlenker einer Anbauvorrichtung eines Traktors**
Tractor hitch lower link lifting device
Dispositif de levage pour bras inférieurs d'accouplement de tracteur

(30) Priorität: 09.01.1999 DE 19900570; 23.08.1999 DE 19939967
(43) Veröffentlichungstag der Anmeldung: 12.07.2000
(73) Patentinhaber: GKN Walterscheid GmbH, 53797 Lohmar (DE)
(72) Erfinder: Coenen, Herbert, Dipl.-Ing., 53639 Königswinter (DE)
(74) Vertreter: Harwardt, Günther, Dipl.-Ing.

(56) Entgegenhaltungen:
- DE-A- 2 233 174
- DE-A- 2 329 761
- DE-A- 3 815 409
- US-A- 4 825 956

## Beschreibung

Die Erfindung betrifft ein Hubwerk für die Unterlenker einer Anbauvorrichtung eines Traktors oder einer selbstfahrenden Arbeitsmaschine.

Traktoren oder auch selbstfahrende Arbeitsmaschinen sind am Heck und ggf. zusätzlich an der Front mit einer Anbauvorrichtung versehen, die die Unterlenker umfasst, welche entgegengesetzt zur Längsachse des Traktors oder der selbstfahrenden Arbeitsmaschine versetzt angeordnet sind. Sie sind mit einem Ende gelenkig, insbesondere um eine im wesentlichen horizontale Achse schwenkbar, am Heck bzw. an der Front angebracht. Darüber hinaus ist noch eine geringfügige seitliche Schwenkbarkeit gegeben. Die Unterlenker weisen an ihren freien Enden Kuppelmittel zur Verbindung mit einem anzubauenden Gerät auf. Zur Verschwenkung der Unterlenker dient ein Hubwerk. Mittels des Hubwerks wird also ein an den Unterlenkern angebrachtes Gerät getragen und im Verhältnis zum Untergrund angehoben oder abgesenkt. Des weiteren muß das Hubwerk abhängig von dem anzuhängenden Gerät bzw. Arbeitseinsatz es ermöglichen, dass die Unterlenker in gewissem Maße seitlich frei bewegbar sind. Bei anderen Arbeitseinsätzen ist eine vertikale freie Verschwenkbarkeit erforderlich. Vor allem sind Hubwerke im Einsatz, die in den Traktor oder die Arbeitsmaschine integriert sind und zwei parallele Hubarme umfassen, die an den Enden einer Hubwelle befestigt sind. Die Hubwelle selbst wird durch einen Antrieb verschwenkt, so dass sich die Hubarme entsprechend auf einem Kreisbogen bewegen. An den Enden der Hubarme sind Hubstreben festgelegt, die mit den Unterlenkern verbunden sind. Die Hubwelle stellt darüber hinaus die Synchronisation der beiden Hubarme sicher. Um eine verbesserte Anpassbarkeit zu erreichen, ist vor allem bei dem am Heck vorgesehenen Hubwerk eine Längenfeineinstellung der Hubstreben vorgesehen. Ferner ist in der Regel eine Anordnung vorgesehen, die wahlweise eine starre Verbindung mit dem Unterlenker vorsieht oder aber bei Entriegelung eine freie Vertikalbewegung zulässt. Diese Anordnung ermöglicht einen vertikalen Schwimmweg zum Gieren des Gerätes, d.h. einen Querneigungsausgleich um ein spannungsfreies Arbeiten zu ermöglichen.

Beim Fronthubwerk sind die Unterlenker in der Regel miteinander als Schwinge verbunden und der Antrieb in Form von zwei hydraulischen Hubstreben ist unmittelbar mit den Unterlenkern verbunden. Der vertikale Freiheitsgrad zum Ausgleich der Querneigung wird durch ein Langloch im Kuppelelement dargestellt.

Eine solche Anordnung ist beispielsweise in der WO 96/03024 beschrieben. Die beiden hydraulischen Hubstreben sind über eine gemeinsame hydraulische Leitung mit einer Pumpe oder einer Druckversorgungsquelle verbindbar. Dies bedeutet, dass sie mit dem gleichen Druck beaufschlagt sind und in gleichem Maße mit Druckmittel versorgt werden.

Den vorbeschriebenen Hubwerken ist gemeinsam, dass trotz unterschiedlicher konstruktiver Ausführung ein synchroner Bewegungsablauf der beiden Unterlenker gegeben ist und ein vertikaler Freiheitsgrad zur Verfügung steht. Bei den hydraulischen Hubstreben ist von Nachteil, dass ein exakter Gleichlauf nicht gewährleistet ist, weil beispielsweise Leckverluste zu einer unterschiedlichen Verstellung trotz gemeinsamer Beaufschlagung führen können.

Aus der DE 38 15 409 A1 ist ein Hubwerk für Ackerschlepper mit einer Zugkraft- und Lagesteuerung bekannt, welches zwei Unterlenker, die jeweils über einen doppelt-wirkenden Hubzylinder angesteuert werden, aufweist. Die Hubzylinder können über drei Magnetventile von einer Pumpe mit Drucköl beaufschlagt werden. Dabei stellt die an den Unterlenkern gemessene Zugkraft die zu regelnde Regelgröße und die Höhenposition der Unterlenker die Stellgröße zum Anpassen der Zugkraft dar. Für den Fall, dass sich beim Heben oder Senken der Unterlenker eine ungleiche Bewegung der beiden Hubzylinder ergibt wird die Höhenposition aufgrund von Messdaten, die Höhensensoren an den Unterlenkern generieren und an die Steuerung weitergeben, durch den Regler angepasst, bis wieder Gleichlauf erreicht ist. Sollen die beiden Unterlenker eine voneinander abweichende Höhenstellung einnehmen, kann dies durch Betätigen eines Schalters geschehen, welcher die Magnetventile verschiebt und damit die Hubzylinder entsprechend höhenverstellt.

Die US 4 825 956 zeigt ein Hubwerk, welches ermöglicht, dass ein landwirtschaftliches Gerät unabhängig von einer Winkelabweichung relativ zum Traktor um die Längsachse bzw. unabhängig von der Neigung des Bodens in horizontaler Position gehalten wird. Hierfür erfolgt eine Regelung der Höhe der beiden Unterlenker zueinander, wobei zumindest einer der beiden Unterlenker über einen doppelt-wirkenden Hubzylinder höhenverstellbar ist.

Diesen beiden Hubwerken ist gemeinsam, dass die Höhenposition der beiden Unterlenker in Abhängigkeit voneinander geregelt wird.

Der Erfindung liegt die Aufgabe zugrunde, einerseits den Aufbau des Hubwerkes gegenüber den Lösungen nach dem Stand der Technik hinsichtlich der Hauptfunktionen zu vereinfachen und darüber hinaus für die Verstellung eine exakte Synchronisation zu gewährleisten und schließlich weitere Verstellmöglichkeiten vorzusehen.

Diese Aufgabe wird erfindungsgemäß durch ein Hubwerk nach Anspruch 1 gelöst.

Von Vorteil bei dieser Ausbildung ist, dass bei einem vereinfachten Aufbau zusätzliche Funktionen gegeben sind. Es ist ferner eine exakte Verstellung gewährleistet, da die jeweilige Ist-Stellung der Unterlenker mit der vorgegebenen Soll-Stellung verglichen wird und eine Nachführung jeweils so erfolgt, dass die Soll-Stellung angestrebt wird. Dies bedeutet auch, dass grundsätzlich für beide Unterlenker die gleiche, beziehungsweise die vorgegebene Stellung eingenommen wird. Durch Einzelansteuerung der Kolben-Zylinder-Einheiten ist es des weiteren möglich, die Stellung der beiden Unterlenker unabhängig voneinander vorzunehmen und zu regeln, um beispielsweise eine Querneigung auszugleichen.

In der Erfindung ist vorgeschlagen, dass das je Unterlenker vorgesehene Wegeventil in eine vierte Schaltstellung überführbar ist, in der sowohl der kolbenseitige Zylinderraum als auch der kolbenstangenseitige Zylinderraum mit dem Rücklauf verbunden sind. Hierdurch ist beispielsweise dann, wenn bei den Kolben-Zylinder-Einheiten eine Umschaltung auf Rücklauf gegeben ist, d.h. sich die Länge der Kolben-Zylinder-Einheiten frei einstellen kann, auch ein zwangsfreies Abkuppeln eines Gerätes möglich. Des weiteren ist die Einstellung eines Schwimmweges möglich, ohne dass die Bedienungsperson den Fahrersitz verlassen muß, wie es bei den mechanischen Lösungen der Fall ist.

Zur Ergänzung der erfindungsgemäßen Lösung ist ein Wählschalter vorzusehen, der das Anwählen verschiedener Arbeitsweisen ermöglicht und der auf beide Schalteinheiten einwirkt. Somit kann den beiden Schalteinheiten eine Vorgabe in dem Sinne erfolgen, daß eine Steuerung der beiden Unterlenker nach der gleichen oder unterschiedlichen Führungsgröße(n) erfolgt. Ferner ist vorgesehen, daß die beiden Schalteinheiten mit einem gemeinsamen Wählschalter verbunden sind, über den den Schalteinheiten die Überführung eines Wegeventils für einen bestimmten oder der Wegeventile für beide Unterlenker in die vierte Stellung vorgebbar ist. In der vierten Stellung erfolgt ein Druckmittelaustausch zwischen den kolbenstangenseitigen und den kolbenseitigen Zylinderräumen beider Kolben-Zylinder-Einheiten untereinander und mit dem Rücklauf. Vorzugsweise sind die Führungsgrößen vorgebbar, und zwar insbesondere mittels eines Stellorgans manuell vorgebbar. Die Bedienungsperson kann somit die gewünschte Stellung der Unterlenker vorgeben. Durch unterschiedliche Führungsgrößen für die Unterlenker kann eine Querneigung ausgeglichen werden.

Um bei Querneigung des Traktors eine bestimmte Ausrichtung des Gerätes zum Traktor zu erzielen, kann auch ein Neigungssensor genutzt werden, der beispielsweise die Querneigung des Traktors erfaßt. Ferner können Mittel vorgesehen werden, über die zumindest einer der beiden Schalteinheiten ein Signal zur Überlagerung der Führungsgröße zuführbar ist, welcher die Querneigung repräsentiert. Eine Kompensation kann auch durch den Fahrer selbst, aufgrund einer visuellen Einschätzung der Querneigung erfolgen. Beispielsweise kann bestimmt werden, daß der Unterlenker, der am nächsten zum Untergrund liegt, nach der vorgegebenen Führungsgröße gesteuert wird, während die Anpassung des anderen Unterlenkers nur im Sinne eines weiteren Anhebens erfolgen kann. In Ergänzung kann daher auch vorgesehen sein, daß der Wählschalter eine Schaltposition umfaßt, in der der Neigungssensor aktiviert ist und das davon erzeugte Signal der/den den beiden Schalteinheiten zugeführten Führungsgröße(n) überlagerbar ist. Es können auch maximale Differenzen für die Führungsgrößen vorgegeben werden, um eine zu hohe Beanspruchung der Bauteile und des angehängten Gerätes zu vermeiden. Es kann ferner vorgesehen sein, daß beim Anheben eines Gerätes in die Transportstellung ab einer bestimmten Hubstellung ein Geradestellen erfolgt.

Für die Stellung der beiden Unterlenker kommt beispielsweise eine Vorrichtung in Frage, mit der die jeweilige Ausfahrstellung der Kolbenstange der Kolben-Zylinder-Einheit erfaßbar ist.

Es ist jedoch auch möglich, den Stellungsaufnehmer durch einen Drehwinkelsensor darzustellen, der die jeweilige Winkelstellung des zugehörigen Unterlenkers zum Traktor erfaßt.

In der Zeichnung sind verschiedene Ausführungsbeispiele der Erfindung dargestellt. Prinzipiell sind die Ausführungen sowohl auf eine Heckanbauvorrichtung als auch auf eine Frontanbauvorrichtung anwendbar.

Es zeigt
- Figur 1: eine erste Ausführungsform des Hubwerks für eine Traktoranbauvorrichtung, die am Heck eines Traktors angebracht ist,
- Figur 2: einen Schaltkreis für die Verstellung der KolbenZylinder-Einheiten zur Betätigung der Unterlenker, wobei die Kolben-Zylinder-Einheiten mit einer Längenmeßeinrichtung als Stellungsaufnehmer versehen sind,
- Figur 3: schematisch eine Ausführungsform, bei der die Stellungsaufnehmer durch Drehwinkelsensoren dargestellt sind, und
- Figur 4: eine Ausführungsform bei der eine mittelbare Beaufschlagung der Unterlenker durch die Kolben-Zylinder-Einheiten durch Zwischenschaltung eines Hebelgetriebes erfolgt.

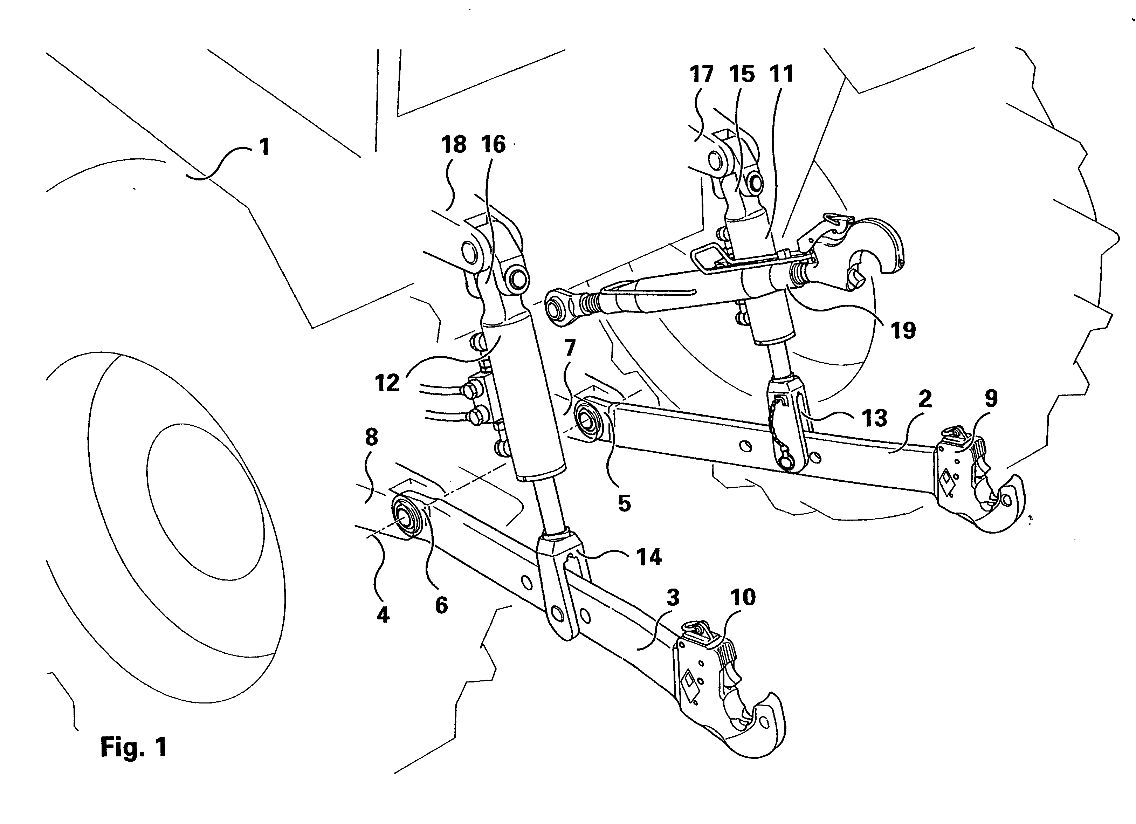

In Figur 1 ist ein Traktorheck mit einer heckseitigen Anbauvorrichtung dargestellt. Es sind zwei Unterlenker 2,3 vorgesehen. Bei Blick auf das Heck des Traktors 1 ist der rechte Unterlenker 2 nach rechts und der linke Unterlenker 3 nach links von der Längsachse des Traktors versetzt angeordnet. Beide Unterlenker 2, 3 sind mittels Anschlußenden 5, 6 an entsprechenden Lagerbökken 7, 8 des Traktorhecks um eine Querachse 4 schwenkbar gelagert, so daß die mit den Kupplungshaken 9, 10 versehenen Enden mehr oder weniger dem Boden, auf dem der Traktor 1 steht, angenähert oder von diesem nach oben sich entfernend bewegt werden können. Zur Bewegung der beiden Unterlenker 2, 3 um die Schwenkachse 4 sind diesen jeweils eine Kolben-Zylinder-Einheit 11 bzw. 12 zugeordnet. Die Kolben-Zylinder-Einheiten 11, 12 greifen mit einem gabelförmigen Anschlußende 13, 14 am zugehörigen Unterlenker 2 bzw. 3 an. Mit ihrem anderen Anschlußende 15 bzw. 16 sind sie an Lagerböcken 17 bzw. 18, die am Traktorheck befestigt sind, gehalten. Die Anordnung erfolgt beispielsweise unter Zwischenschaltung eines Anlenkelementes, das mit dem Gehäuse der zugehörigen Kolben-Zylinder-Einheit 11 bzw. 12 um eine erste Achse schwenkbeweglich verbunden ist und welches darüber hinaus mit dem zugehörigen Lagerbock 17 bzw. 18 um eine zur Schwenkachse 4 parallel verlaufende Achse schwenkbeweglich verbunden ist, um so eine allseitig freie Einstellung der Kolben-Zylinder-Einheiten 11 bzw. 12 bei der Verstellung der Unterlenker 2, 3 zuzulassen.

Im Bereich der Anschlußenden 5, 6 sind darüber hinaus die beiden Unterlenker 2, 3 noch in geringem Maße um ihre Längsachse kippbar.

Zur Vervollständigung der Anbauvorrichtung ist darüber hinaus ein Oberlenker 19 vorhanden, der zum Ergreifen der oberen Anschlußmittel des anzuhängenden Gerätes dient. Die beiden Kupplungshaken 9, 10 dienen zum Ergreifen der unteren Anschlußelemente des aufzunehmenden Gerätes.

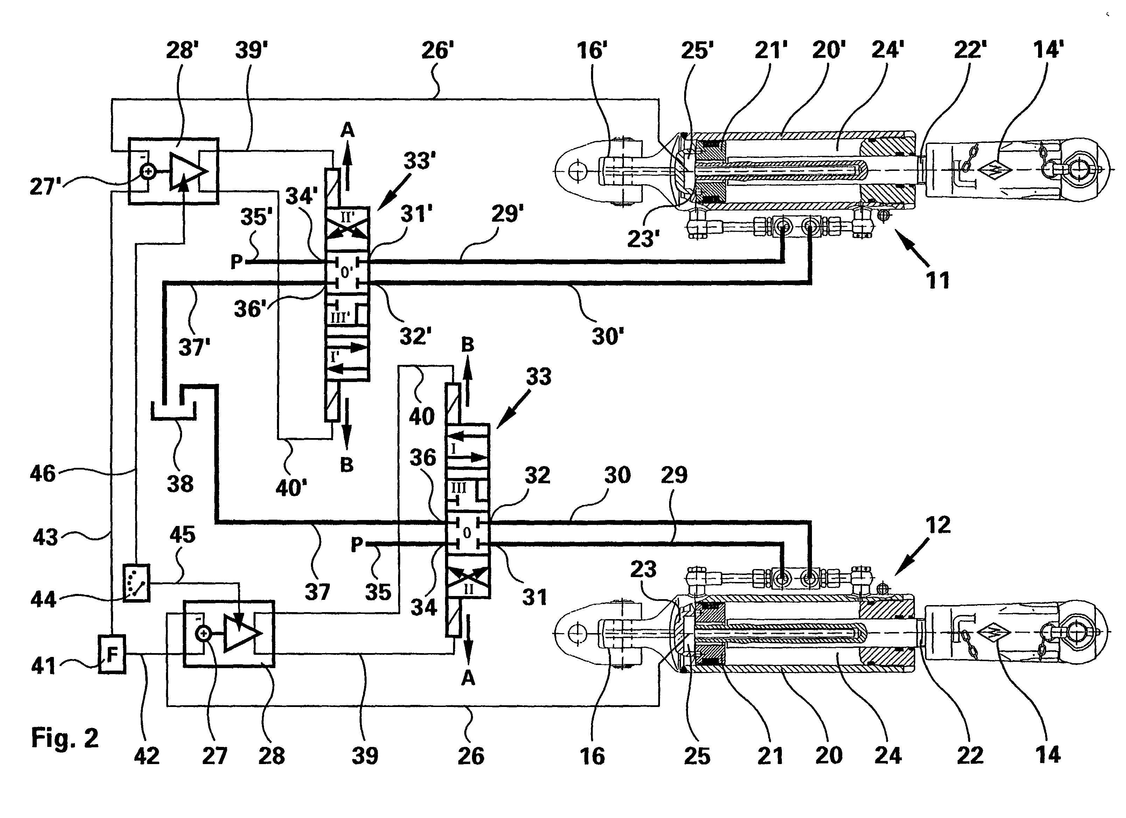

Die Funktion des Hubwerkes, das die beiden Kolben-Zylinder-Einheiten 11, 12 umfaßt, ist anhand Figur 2 näher beschrieben.

Die beiden Kolben-Zylinder-Einheiten 11, 12 zur Betätigung des rechten bzw. linken Unterlenkers 2, 3 und deren zugehörigen Schaltmittel sind identisch aufgebaut, so daß nachfolgend eine Beschreibung der Betätigung nur anhand der dem linken Unterlenker 3 zugeordneten Kolben-Zylinder-Einheit 12 erfolgt. Die Kolben-Zylinder-Einheit 12 weist ein Gehäuse 20 auf, das den Kolben 21 mit der aus dem Gehäuse 20 herausgeführten Kolbenstange 22 verstellbar aufnimmt. Die Kolbenstange 22 trägt das Anschlußende 14 zur Verbindung mit dem linken Unterlenker und das Gehäuse 20 trägt das Anschlußende 16 zur Verbindung mit dem traktorseitig vorgesehenen Lagerbock. Für die weitere Beschreibung ist der kolbenseitige Zylinderraum mit 23 bezeichnet, während der kolbenstangenseitige Zylinderraum das Bezugszeichen 24 trägt. Die Kolben-Zylinder-Einheit ist in Figur 2 in der vollkommen eingefahrenen Position dargestellt, d.h. der kolbenseitige Zylinderraum 23 hat ein Minimum angenommen, während der kolbenstangenseitige Zylinderraum 24 sein Maximum angenommen hat. Des weiteren ist ein Stellungsaufnehmer 25 in die Kolben-Zylinder-Einheit 12 integriert. Der Stellungsaufnehmer 25 erzeugt ein Signal, das die Einfahr- bzw. Ausfahrposition der Kolbenstange 22 in das Gehäuse 20 repräsentiert und damit die Länge, die sich zwischen den Anlenkpunkten der Anschlußenden 14, 16 ergibt. Der Stellungsaufnehmer 25 ist über eine Signalleitung 26 mit einem Vergleicher 27 einer Schalteinheit 28 verbunden. Die Kolben-Zylinder-Einheit 12 ist über Druckmittelleitungen 29, 30 mit den beiden Anschlüssen 31, 32 eines Wegeventils 33 verbunden. So stellt die Druckmittelleitung 29 eine Verbindung zwischen dem kolbenseitigen Zylinderraum 23 und dem ersten Anschluß 31 her, während die zweite Druckmittelleitung 30 eine Verbindung zwischen dem kolbenstangenseitigen Zylinderraum 24 und dem zweiten Anschluß 32 des Wegeventils 33 herstellt. Das Wegeventil 33 weist zwei weitere Anschlüsse auf, nämlich einen dritten Anschluß 34, der mit einer Druckleitung 35 verbunden ist, die von einer Pumpe P oder einer sonstigen Druckmittelversorgung gespeist wird. Der vierte Anschluß 36 ist über die Rücklaufleitung 37 drucklos an den Tank 38 angeschlossen. Bei dem Wegeventil 33 handelt es sich um ein elektromagnetisch verstellbares Ventil, das die vier Stellungen einnehmen kann und für die einzelnen Stellungen unterschiedliche Verbindungen zwischen den Anschlüssen 31, 32, 34, 36 herstellt oder sperrt. Es ist hierzu entweder in Richtung A oder die Richtung B verstellbar, wobei die Grundstellung, bei der sämtliche Anschlüsse 31, 32, 34, 36 voneinander getrennt sind, dargestellt ist. Die Bewegung des Wegeventils 33 zur Einnahme einer der möglichen Schaltstellungen wird durch entsprechende Steuerleitungen 39, 40 veranlaßt, welche ihre Schaltimpulse von der Schalteinheit 28 erhalten. Dem Vergleicher 27 der Schalteinheit 28 ist über eine Steuerleitung 42 eine Führungsgröße F durch ein manuell einregelbares Stellorgan 41 vorgebbar. Mittels des manuell einstellbaren Stellorgans 41 kann somit die Hubstellung des Unterlenkers, dem die Kolben-Zylinder-Einheit 12 zugehörig ist, eingestellt werden. Das Wegeventil 33 ist in der ersten Stellung, d.h. der Schaltstellung "0" dargestellt, wobei sämtliche Anschlüsse 31, 32, 34, 36 gesperrt sind. In der Schaltstellung "I" ist die Druckleitung 35 über den Anschluß 34 und den Anschluß 31 mit der Druckmittelleitung 29 und über diese mit dem kolbenseitigen Zylinderraum 23 verbunden, so daß die Kolbenstange 22 aus dem Gehäuse 20 ausfährt. In der Stellung "II" des Wegeventiles 33 ist die Druckleitung 35 über den Anschluß 34 mit dem Anschluß 32 und über die zugehörige Druckmittelleitung 30 mit dem kolbenstangenseitigen Zylinderraum 24 verbunden, so daß die Kolbenstange 22 in das Gehäuse 20 einfährt. Dies entspricht einem Anheben des zugehörigen Unterlenkers.

In der Stellung "III" des Wegeventils 33 ist die Verbindung von der Druckleitung 35 und dem Anschluß 34 gesperrt. Die Druckmittelleitungen 29 und 30 sind über die zugehörigen Anschlüsse 31 und 32 miteinander und über den Anschluß 36 mit dem Rücklauf 37 zum Tank 38 verbunden, so daß ein freier Druckmittelaustausch möglich ist, d.h. die Kolbenstange 22 kann frei in das Gehäuse 20 ein- und ausfahren.

Der im Zusammenhang mit der Kolben-Zylinder-Einheit 12 beschriebene Aufbau ist gleichermaßen auch bei der Kolben-Zylinder-Einheit 11 verwirklicht. Die Beschreibung zur Kolben-Zylinder-Einheit 12 ist daher auch auf die Kolben-Zylinder-Einheit 11 lesbar, und bei dieser sind für die der Kolben-Zylinder-Einheit 12 entsprechenden Bauteile gleiche Referenznummern verwendet, die jedoch im Unterschied nur mit einem Beistrich versehen sind.

Das Stellorgan 41 wirkt auch über eine Steuerleitung 43 auf die zur Kolben-Zylinder-Einheit 11 gehörende Schalteinheit 28' ein. Dies bedeutet, daß auch der Schalteinheit 28' die gleiche oder eine abweichende Führungsgröße F zugeleitet wird, die über die Steuerleitung 42 der Schalteinheit 28 zugeführt wird. Zusätzlich ist ein Wählschalter 44 vorhanden, der ebenfalls auf beide Schalteinheiten 28 und 28' über Steuerleitungen 45, 46 einwirkt. Der Wählschalter 44 läßt die Einstellung verschiedener Arbeitsweisen zu. So kann z.B. in einer ersten Wählposition eine Arbeitsweise erreicht werden, bei der eine Synchronverstellung beider Unterlenker gewünscht ist. Dies bedeutet, daß eine identische Veränderung der Länge der beiden Kolben-Zylinder-Einheiten 11, 12 gewünscht ist. Gleichzeitig bedeutet dies auch, daß die den beiden Schalteinheiten 28, 28' über das Stellorgan 41 vorgegebene Führungsgröße F für beide Kolben-Zylinder-Einheiten 11 und 12 gleich groß ist, so daß eine Abweichung beider Kolben-Zylinder-Einheiten 11, 12 von der Führungsgröße abhängig von der Größe der Abweichung zu einer Steuerung der einzelnen Wegeventile 33, 33' führt, um die entsprechende Längeneinstellung erzielen zu können. Diese wird erreicht, wenn das Steuersignal, das von dem Stellungsaufnehmer 25 über die Signalleitung 26 an den Vergleicher 27 gemeldet wird, in einer Größe wiedergegeben wird, die der Führungsgröße F entspricht. Dann wird die Schaltstellung "0" eingenommen. Bei Abweichungen hiervon, die ein Ausfahren der Kolbenstange 22 oder ein Einfahren derselben erfordern, erfolgt eine Überführung des Wegeventils 33 in eine der beiden anderen Schaltstellungen "I" oder "II". Für den Fall, daß der Wählschalter 44 in eine Position überführt wird, bei der eine Schwimmbewegung der beiden Unterlenker zugelassen werden soll, erfolgt eine Überführung beider Wegeventile 33 in die Stellung "III". Werden über das Stellorgan 41 für die Betätigung beider Unterlenker gleiche Führungsgrößen vorgegeben, werden beide auch auf identischen Stellungen geführt.

Dieses System kann eine Ergänzung durch die zusätzliche Verwendung eines Querneigungssensors erfahren, bei dem zusätzlich eine Überlagerung abhängig von der Neigungsstellung des Traktors erfolgen kann. Der Wählschalter 44 kann eine solche Steuerungsmöglichkeit ebenfalls vorsehen und die beiden Schalteinheiten 28, 28' entsprechend beeinflussen. Das vom Neigungssensor zusätzlich in die Schalteinheit 28 oder 28' eingeleitete Signal kann dann zur Überlagerung der Führungsgröße F führen und so eine der Kolben-Zylinder-Einheiten 11, 12 veranlassen, eine größere oder kürzere Länge einzunehmen.

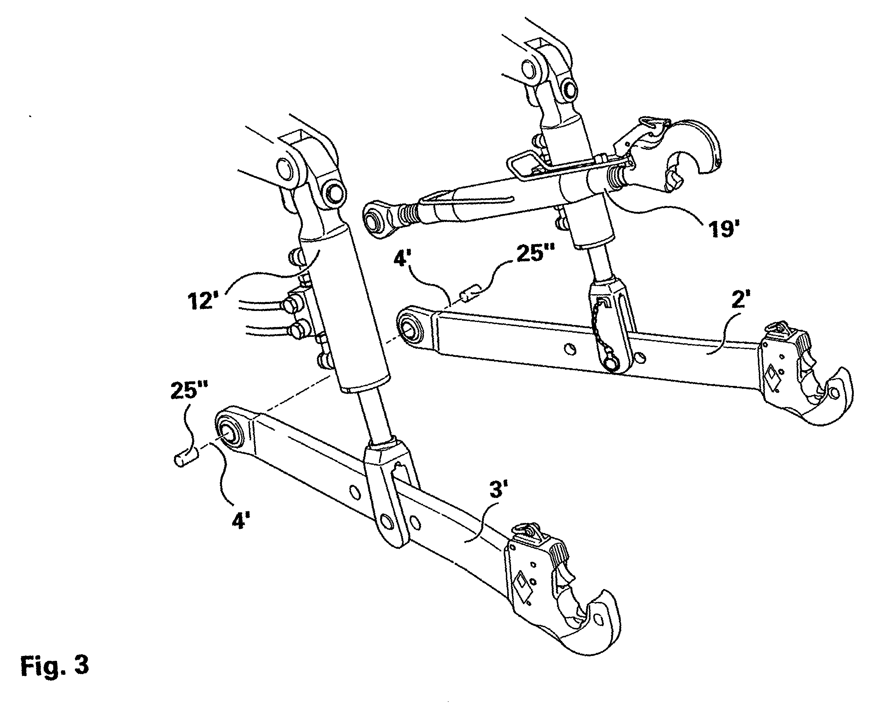

Die Figur 3 zeigt eine abgewandelte Ausführungsform zu der gemäß Figuren 1 und 2. Es sind ebenfalls die beiden Unterlenker 2', 3' und der darüber angeordnete Oberlenker 19' ersichtlich. Des weiteren ist erkennbar, daß den beiden Unterlenkern 2', 3' jeweils eine Kolben-Zylinder-Einheit 11', 12' zugeordnet ist. In Abwandelung zur Ausführung der Kolben-Zylinder-Einheiten 11, 12 gemäß Figur 2 weisen die Kolben-Zylinder-Einheiten 11', 12' gemäß Figur 3 keine Längenmeßeinrichtung als Stellungsaufnehmer auf. Als Stellungsaufnehmer 25' sind Drehwinkelsensoren vorgesehen, die auf der Schwenkachse 4' der beiden Unterlenker 2', 3' angeordnet sind und die Winkelstellung der beiden Unterlenker 2', 3' aufnehmen, welche die Schwenkstellung derselben repräsentiert. Das von den Stellungsaufnehmern 25'' erzeugte Signal wird an den jeweiligen Schalteinheiten zugeführt.

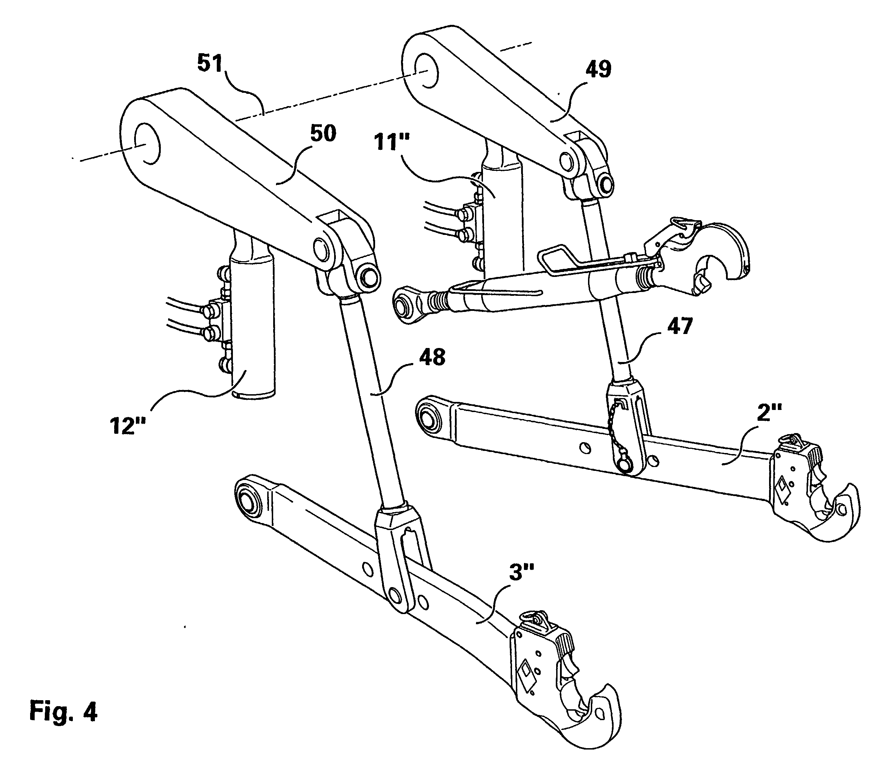

Figur 4 zeigt eine weitere Ausführungsform, bei der die beiden Unterlenker 2, 2', 3'' über einfache Hubstreben 47, 48, die nicht längenveränderlich sind, mit zwei Hebelarmen 49, 50 verbunden sind, die um eine gemeinsame Schwenkachse 51 schwenkverstellbar sind, ohne jedoch miteinander synchronisiert zu sein. Die beiden Hebelarme 49, 50 werden von zwei Kolben-Zylinder-Einheiten 11'' und 12'' beaufschlagt, so daß eine Betätigung der beiden Unterlenker 2'' bzw. 3'' unter Zwischenschaltung des Hebelgetriebes aus den beiden Hubstreben 47, 48 und den zugehörigen Hebelarmen 49, 50 erfolgt. Die beiden Kolben-Zylinder-Einheiten 11'' und 12'' können eine Ausbildung aufweisen, die der nach Figur 2 entspricht. Hinsichtlich der Stellungsaufnahme für die Unterlenker 2, 2' ist auch eine Ausbildung möglich, wie sie im Zusammenhang mit Figur 3 beschrieben ist.

### Bezugszeichenliste

- 1: Traktor
- 2, 2', 2'': rechter Unterlenker
- 3, 3', 3'': linker Unterlenker
- 4, 4': Schwenkachse
- 5: Anschlußende
- 6: Anschlußende
- 7: Lagerbock
- 8: Lagerbock
- 9: Kupplungshaken
- 10: Kupplungshaken
- 11, 11', 11'', 11''': Kolben-Zylinder-Einheit
- 12, 12', 12'': Kolben-Zylinder-Einheit
- 13: Anschlußende
- 14, 14': Anschlußende
- 15: Anschlußende
- 16, 16': Anschlußende
- 17: Lagerbock
- 18: Lagerbock
- 19, 19': Oberlenker
- 20, 20': Gehäuse
- 21, 21': Kolben
- 22, 22': Kolbenstange
- 23, 23', 23'': kolbenseitiger Zylinderraum
- 24, 24: kolbenstangenseitiger Zylinderraum
- 25, 25', 25'': Stellungsaufnehmer
- 26, 26': Signalleitung
- 27, 27': Vergleicher
- 28, 28': Schalteinheit
- 29, 29': Druckmittelleitung
- 30, 30': Druckmittelleitung
- 31, 31', 31''': erster Anschluß
- 32, 32': zweiter Anschluß
- 33, 33', 33''': Wegeventil
- 34, 34', 34''': dritter Anschluß
- 35, 35': Druckleitung
- 36, 36', 36''': vierter Anschluß
- 37, 37': Rücklauf
- 38: Tank
- 39, 39': Steuerleitung
- 40, 40': Steuerleitung
- 41: Stellorgan
- 42: Steuerleitung
- 43: Steuerleitung
- 44: Wählschalter
- 45: Steuerleitung
- 46: Steuerleitung
- 47: Hubstrebe
- 48: Hubstrebe
- 49: Hebelarm
- 50: Hebelarm
- 51: Schwenkachse

- F: Führungsgröße
- P: Druckmittelversorgung

## Patentansprüche

1. Hubwerk für die Unterlenker einer Anbauvorrichtung eines Traktors, die mit einem Ende am Traktor schwenkbeweglich angebracht sind, umfassend
je Unterlenker (2, 2', 2'', 3, 3', 3'') einen Stellungsaufnehmer (25, 25', 25''), der ein die jeweilige Schwenkstellung des Unterlenkers (2, 2', 2'', 3, 3', 3'') repräsentierendes Stellungssignal erzeugt,
je Unterlenker (2, 2', 2'', 3, 3', 3'') eine hydraulisch beaufschlagbare, doppelwirkende Kolben-Zylinder-Einheit (11, 11', 11'', 12, 12', 12''), die mit einem Ende (5, 6, 13, 14, 14', 15, 16, 16') am Traktor (1) angebracht ist und mit ihrem anderen Ende (5, 6, 13, 14, 14', 15, 16, 16') entweder unmittelbar oder mittelbar über ein zwischengeschaltetes Hebelgetriebe (47, 48, 49, 50) am Unterlenker (2, 2', 2'', 3, 3', 3'') angreift und die einen kolbenseitigen Zylinderraum (23, 23') und einen kolbenstangenseitigen Zylinderraum (24, 24') besitzt,
je Kolben-Zylinder-Einheit (11, 11', 11'', 12, 12', 12'') einen Schaltkreis, welcher ein Wegeventil (33, 33') mit vier Anschlüssen (31, 31', 32, 32', 34, 34', 36, 36') umfasst, welches in mindestens vier Schaltstellungen, überführbar ist,
wobei zwei Anschlüsse (31, 31', 32, 32') zur Verbindung mit der Kolben-Zylinder-Einheit (11, 11', 11'', 12, 12', 12'') dienen, wovon der erste Anschluß (31, 31') mit dem kolbenseitigen Zylinderraum (23, 23') und der zweite Anschluß (32, 32') mit dem kolbenstangenseitigen Zylinderraum (24, 24') über Leitungen (29, 29', 30, 30') verbunden ist,
wobei ferner ein dritter Anschluß (34, 34') zur Verbindung mit einer Druckmittelversorgung (P) und der vierte Anschluß (36, 36') zur Verbindung mit einem Rücklauf (37, 37') dient und
wobei in der ersten Stellung des Wegeventils (33, 33') sämtliche Anschlüsse (31, 31', 32, 32', 34, 34', 36, 36') des Wegeventils (33, 33') gesperrt sind, in der zweiten Stellung der kolbenseitige Zylinderraum (23, 23') mit der Druckmittelversorgung (P) und der kolbenstangenseitige Zylinderraum (24, 24') mit dem Rücklauf (37, 37'), in der dritten Stellung der kolbenstangenseitige Zylinderraum (24, 24') mit der Druckmittelversorgung (P) und der kolbenseitige Zylinderraum (23, 23') mit dem Rücklauf (37, 37') verbunden ist,
und in der vierten Schaltstellung sowohl der kolbenseitige Zylinderraum (23, 23') als auch der kolbenstangenseitige Zylinderraum (24, 24') mit dem Rücklauf (37, 37') verbunden sind,
und je Schaltkreis ferner eine elektrische Schalteinheit (28, 28') vorgesehen ist, die einen Eingang zur Einleitung einer der Soll-Stellung des Unterlenkers (2, 2', 2'', 3, 3', 3'') entsprechenden Führungsgröße (F), einen Eingang zur Einleitung eines vom Stellungsaufnehmer (25, 25', 25'') kommenden und die jeweilige Stellung des Unterlenkers (2, 2', 2'', 3, 3', 3'') repräsentierenden Stellungssignals und einen Vergleicher (27, 27'), der die Führungsgröße (F) mit dem Stellungssignal vergleicht, besitzt,
wobei die Führungsgröße (F) den beiden Schalteinheiten (28, 28') mit gleichen oder unterschiedlichen Werten vorgebbar ist und
wobei die Schalteinheit (28, 28') abhängig vom Vergleichsergebnis das Wegeventil (33, 33') zur Einnahme einer der mindestens vier Stellungen veranlasst.

2. Hubwerk nach Anspruch 1,
**dadurch gekennzeichnet,**
**dass** die beiden Schalteinheiten (28, 28') mit einem gemeinsamen Wählschalter (44) verbunden sind, über den den Schalteinheiten (28, 28') eine Steuerung der beiden Unterlenker (2, 2', 2'', 3, 3', 3'') nach der gleichen oder unterschiedlichen Führungsgröße(n) (F) vorgebbar ist.

3. Hubwerk nach einem der Ansprüche 1 oder 2,
**dadurch gekennzeichnet,**
**dass** die beiden Schalteinheiten (28, 28') mit einem gemeinsamen Wählschalter (44) verbunden sind, über den den Schalteinheiten (28, 28') die Überführung eines Wegeventils (33, 33') für einen bestimmten oder der Wegeventile (33, 33') für beide Unterlenker (2, 2', 2'', 3, 3', 3'') in die vierte Stellung vorgebbar ist.

4. Hubwerk nach einem der Ansprüche 1 bis 3,
**dadurch gekennzeichnet,**
**dass** die Führungsgröße (F) mittels eines Stellorgans (41) manuell vorgebbar ist.

5. Hubwerk nach einem der Ansprüche 1 bis 4,
**dadurch gekennzeichnet,**
**dass** Mittel vorgesehen sind, über die zumindest einer der beiden Schalteinheiten (28, 28') ein eine Querneigung repräsentierendes Signal zur Überlagerung der Führungsgröße (F) zuführbar ist.

6. Hubwerk nach Anspruch 5,
**dadurch gekennzeichnet,**
**dass** ein Neigungssensor vorhanden ist, der die Querneigung des Traktors (1) erfasst.

7. Hubwerk nach Anspruch 6,
**dadurch gekennzeichnet,**
**dass** der Wählschalter (44) eine Schaltposition umfasst, in der der Neigungssensor aktiviert ist, der ein Signal erzeugt, das der den beiden Schalteinheiten (28, 28') zugeführten Führungsgrößen (F) überlagerbar ist.

8. Hubwerk nach einem der Ansprüche 1 bis 7,
**dadurch gekennzeichnet,**
**dass** der Stellungsaufnehmer (25, 25', 25'') durch eine Vorrichtung dargestellt ist, mit der die jeweilige Ausfahrstellung der Kolbenstange (22, 22'') der Kolben-Zylinder-Einheit (11, 11', 11'') erfassbar ist.

9. Hubwerk nach einem der Ansprüche 1 bis 7,
**dadurch gekennzeichnet,**
**dass** der Stellungsaufnehmer (25, 25', 25'') durch einen Drehwinkelsensor dargestellt ist, der die jeweilige Winkelstellung des zugehörigen Unterlenkers (2, 2', 2'', 3, 3', 3'') zum Traktor (1) erfasst.

## Claims

1. Lifting device for the lower steering arms of an attachment device of a tractor, which are pivotably attached with one end at the tractor, comprising
for each lower steering arm (2, 2', 2", 3, 3', 3") a position sensor (25, 25', 25"), which produces a positioning signal representing the respective pivot position of the lower steering arm (2, 2', 2", 3, 3', 3"),
for each lower steering arm (2, 2', 2", 3, 3', 3") a hydraulically loadable, double acting piston-cylinder-unit (11, 11', 11", 12, 12', 12"), which is attached with one end (5, 6, 13, 14, 14', 15, 16, 16') at the tractor (1) and which engages with its other end (5, 6, 13, 14, 14', 15, 16, 16') either directly or indirectly via an interconnected bar linkage (47, 48, 49, 50) at the lower steering arm (2, 2', 2", 3, 3', 3") and which has a piston-side cylinder chamber (23, 23') and a piston rod-side cylinder chamber (24, 24'),
for each piston-cylinder-unit (11, 11', 11", 12, 12', 12") a switching circuit, which comprises a directional control valve (33, 33') with four ports (31, 31', 32, 32', 34, 34', 36, 36'), which can be transferred into at least four switching positions,
wherein two ports (31, 31', 32, 32') serve for the connection to the piston-cylinder-unit (11, 11', 11 ", 12, 12', 12"), of which the first port (31, 31 ') is connected to the piston-side cylinder chamber (23, 23') and the second port (32, 32') is connected to the piston rod-side cylinder chamber (24, 24') via lines (29, 29', 30, 30'),
wherein, further, a third port (34, 34') serves for the connection to a pressure agent supply source (P) and the fourth port (36, 36') serves for the connection to a return line (37, 37') and
wherein in the first position of the directional control valve (33, 33') all ports (31, 31', 32, 32', 34, 34', 36, 36') of the directional control valve (33, 33') are closed, in the second position the piston-side cylinder chamber (23, 23') is connected to the pressure agent supply source (P) and the piston rod-side cylinder chamber (24, 24') is connected to the return line (37, 37'), in the third position the piston rod-side cylinder chamber (24, 24') is connected to the pressure agent supply source (P) and the piston-side cylinder chamber (23, 23') is connected to the return line (37, 37') and
furthermore, for each switching circuit an electric switching unit (28, 28') is provided, which has an input for introducing a reference signal (F) corresponding to the nominal position of the lower steering arm (2, 2', 2", 3, 3', 3"), an input for introducing a positioning signal from the position recording sensor (25, 25', 25") and representing the respective position of the lower steering arm (2, 2', 2", 3, 3', 3") and a comparator (27, 27'), which compares the reference signal (F) with the positioning signal,
wherein the reference signals (F) can be passed on to both switching units (28, 28') with identical or different values and
wherein the switching unit (28, 28'), depending on the comparison value, causes the directional control valve (33, 33') to take up one of the at least four positions.

2. Lifting device according to claim 1,
**characterised in that**
the two switching units (28, 28') are connected to a common selector switch (44), via which a control of the two lower steering arms (2, 2', 2", 3, 3', 3") according to the identical or different reference signal(s) can be passed on to the switching units (28, 28').

3. Lifting device according to one of claims 1 or 2,
**characterised in that**
the two switching units (28, 28') are connected to a common selector switch (44), via which the transfer of one directional control valve (33, 33') for a specific lower steering arm (2, 2', 2", 3, 3', 3") or of the directional control valves (33, 33') for both lower steering arms (2, 2', 2", 3, 3', 3") into the fourth position can be passed on to the switching units (28, 28').

4. Lifting device according to one of claims 1 to 3,
**characterised in that**
the reference signal (F) can be passed on manually by a setting element (41).

5. Lifting device according to one of claims 1 to 4,
**characterised in that**
means are provided, via which to at least one of the two switching units (28, 28') a signal, representing a lateral inclination, can be transmitted to be superimposed on the reference signal (F).

6. Lifting device according to claim 5,
**characterised in that**
an inclination sensor is provided, which records the lateral inclination of the tractor (1 ).

7. Lifting device according to claim 6,
**characterised in that**
the selection switch (44) includes a switching position, in which the inclination sensor is active, producing a signal, which can be superimposed on the reference signals (F) transmitted to the two switching units (28, 28').

8. Lifting device according to one of claims 1 to 7,
**characterised in that**
the position sensor (25, 25', 25") is represented by a device, by which the respective extended position of the piston rod (22, 22") of the piston-cylinder-unit can be recorded.

9. Lifting device according to one of claims 1 to 7,
**characterised in that**
the position sensor (25, 25', 25") is represented by a rotary angle sensor, which records the respective rotary angle position of the associated lower steering arm (2, 2', 2", 3, 3', 3") relative to the tractor (1).

## Revendications

1. Dispositif de levage pour les bras inférieurs d'un dispositif d'attelage d'un tracteur qui sont placés mobiles en pivotement sur le tracteur avec une extrémité, comprenant
un capteur de position (25, 25', 25'') par bras inférieur (2, 2', 2'', 3, 3', 3'') qui génère un signal de position représentant la position de pivotement correspondante du bras inférieur (2, 2', 2'', 3, 3', 3''),
une unité piston/cylindre à double effet et à alimentation hydraulique (11, 11', 11'', 12, 12', 12'') par bras inférieur (2, 2', 2'', 3, 3', 3'') qui est placée sur le tracteur (1) avec une extrémité (5, 6, 13, 14, 14', 15, 16, 16') et appliquée au bras inférieur (2, 2', 2'', 3, 3', 3'') avec son autre extrémité (5, 6, 13, 14, 14', 15, 16, 16') soit directement, soit indirectement via un mécanisme à levier intermédiaire (47, 48, 49, 50), et qui dispose d'une chambre de cylindre du côté du piston (23, 23') et d'une chambre de cylindre du côté de la tige du piston (24, 24'),
un circuit de commutation par unité piston/cylindre (11, 11', 11'', 12, 12', 12''), lequel comprend un distributeur (33, 33') avec quatre branchements (31, 31', 32, 32', 34, 34', 36, 36'), ledit distributeur étant transférable dans au moins quatre positions de commutation,
deux branchements (31, 31', 32, 32') servant au raccordement à l'unité piston/cylindre (11, 11', 11'', 12, 12', 12''), dont le premier branchement (31, 31') est raccordé à la chambre de cylindre du côté du piston (23, 23') et le deuxième branchement (32, 32') est raccordé à la chambre de cylindre du côté de la tige du piston (24, 24') via des conduites (29, 29', 30, 30'),
un troisième branchement (34, 34') servant en outre au raccordement à une alimentation en pression (P) et le quatrième branchement (36, 36') servant au raccordement à un retour (37, 37') et
l'ensemble des branchements (31, 31', 32, 32', 34, 34', 36, 36') du distributeur (33, 33') étant bloqués dans la première position du distributeur (33, 33'), la chambre de cylindre du côté du piston (23, 23') étant raccordée à l'alimentation en pression (P) et la chambre de cylindre du côté de la tige du piston (24, 24') au retour (37, 37') dans la deuxième position, la chambre de cylindre du côté de la tige du piston (24, 24') étant raccordée à l'alimentation en pression (P) et la chambre de cylindre du côté du piston (23, 23') au retour (37, 37') dans la troisième position, et dans la quatrième position de commutation, aussi bien la chambre de cylindre du côté du piston (23, 23') que la chambre de cylindre du côté de la tige du piston (24, 24') étant raccordées au retour (37, 37'),
et une unité de commutation électrique (28, 28') étant en outre prévue par circuit de commutation, ladite unité de commutation électrique disposant d'une entrée en vue de l'introduction d'une valeur de référence (F) correspondant à la position théorique du bras inférieur (2, 2', 2'', 3, 3', 3''), d'une entrée en vue de l'introduction d'un signal de position provenant du capteur de position (25, 25', 25'') et représentant la position correspondante du bras inférieur (2, 2', 2'', 3, 3', 3'') ainsi que d'un comparateur (27, 27') qui compare la valeur de référence (F) avec le signal de position,
la valeur de référence (F) étant spécifiable aux deux unités de commutation (28, 28') avec des valeurs semblables ou différentes et
l'unité de commutation (28, 28') ordonnant au distributeur (33, 33') de prendre une des positions au nombre minimum de quatre en fonction du résultat de la comparaison.

2. Dispositif de levage selon la revendication 1, **caractérisé en ce que** les deux unités de commutation (28, 28') sont raccordées à un sélecteur commun (44), via lequel une commande des deux bras inférieurs (2, 2', 2'', 3, 3', 3'') est spécifiable aux unités de commutation (28, 28') selon les valeurs de référence (F) semblables ou différentes.

3. Dispositif de levage selon l'une quelconque des revendications 1 ou 2, **caractérisé en ce que** les deux unités de commutation (28, 28') sont raccordées à un sélecteur commun (44), via lequel le transfert d'un distributeur (33, 33') pour un bras inférieur défini (2, 2', 2", 3, 3', 3'') ou des distributeurs (33, 33') pour les deux bras inférieurs (2, 2', 2'', 3, 3', 3'') dans les quatre positions est spécifiable aux unités de commutation (28, 28').

4. Dispositif de levage selon l'une quelconque des revendications 1 à 3, **caractérisé en ce que** la valeur de référence (F) est spécifiable manuellement au moyen d'un organe de réglage (41).

5. Dispositif de levage selon l'une quelconque des revendications 1 à 4, **caractérisé en ce que** des moyens sont prévus via lesquels un signal représentant une inclinaison latérale destiné à être superposé à la valeur de référence (F) peut être acheminé à au moins une des deux unités de commutation (28, 28').

6. Dispositif de levage selon la revendication 5, **caractérisé en ce qu'**un capteur d'inclinaison est disponible qui acquiert l'inclinaison latérale du tracteur (1).

7. Dispositif de levage selon la revendication 6, **caractérisé en ce que** le sélecteur (44) comprend une position de commutation dans laquelle le capteur d'inclinaison est activé, ledit capteur d'inclinaison générant un signal qui est superposable aux valeurs de référence (F) acheminées aux deux unités de commutation (28, 28').

8. Dispositif de levage selon l'une quelconque des revendications 1 à 7, **caractérisé en ce que** le capteur de position (25, 25', 25'') est représenté par un dispositif au moyen duquel la position de sortie respective de la tige de piston (22, 22') de l'unité piston/cylindre (11, 11', 11'') peut être acquise.

9. Dispositif de levage selon l'une quelconque des revendications 1 à 7, **caractérisé en ce que** le capteur de position (25, 25', 25'') est représenté par un capteur d'angle de rotation qui acquiert la position angulaire respective du bras inférieur correspondant (2, 2', 2'', 3, 3', 3'') par rapport au tracteur (1).
